(19) Europäisches Patentamt
European Patent Office
Office européen des brevets

(11) **EP 3 470 982 B1**

(12) **FASCICULE DE BREVET EUROPEEN**

(45) Date de publication et mention
de la délivrance du brevet:
**17.06.2020  Bulletin 2020/25**

(51) Int Cl.:
***H04L 1/18*** *(2006.01)*

(21) Numéro de dépôt: **18198985.6**

(22) Date de dépôt: **05.10.2018**

(54) **PROCEDE ET DISPOSITIF POUR LA GESTION DYNAMIQUE DU DELAI DE RETRANSMISSION DE MESSAGE SUR UN RESEAU D'INTERCONNEXION**

VERFAHREN UND VORRICHTUNG ZUR DYNAMISCHEN VERWALTUNG DER VERZÖGERUNG DER WIEDERHOLTEN AUSSENDUNG EINER NACHRICHT IN EINEM VERBINDUNGSNETZ

METHOD AND DEVICE FOR DYNAMICALLY MANAGING THE MESSAGE RETRANSMISSION DELAY ON AN INTERCONNECTION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2017  FR 1759459**

(43) Date de publication de la demande:
**17.04.2019  Bulletin 2019/16**

(73) Titulaire: **BULL SAS
78340 Les Clayes sous Bois (FR)**

(72) Inventeurs:
 • **CHEHAIBAR, Ghassan
   78280 GUYANCOURT (FR)**
 • **VELUT, Jean-Luc
   95280 JOUY le MOUTIER (FR)**

(74) Mandataire: **A.P.I. Conseil
   Immeuble Newton
   4 rue Jules Ferry
   64000 Pau (FR)**

(56) Documents cités:
   **EP-A2- 0 777 363       WO-A2-2004/010289
   US-A1- 2006 039 412**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne le domaine de la gestion de la transmission de bout en bout de messages sur un réseau, et plus particulièrement de la retransmission de messages sur un réseau d'interconnexion. L'invention concerne un dispositif informatique pour la gestion dynamique de la transmission de bout en bout de messages dans un réseau d'interconnexion. L'invention concerne également un procédé de gestion dynamique du délai de retransmission d'un message au sein d'un réseau d'interconnexion pour pallier à une éventuelle perte de message.

### [Art antérieur]

Dans les réseaux informatiques et les télécommunications, les appareils informatiques envoient des messages les uns aux autres et doivent souvent attendre une réponse, ou un acquittement, avant de poursuivre. En effet, ces messages peuvent être perdus, dupliqués ou corrompus et pour pallier à la perte de messages, il est courant que chaque message reçoive un acquittement. Par exemple, quand un message est envoyé, si après un certain temps, l'acquittement n'est pas reçu alors le système suppose que le message est perdu et le message est alors réémis. Pour éviter d'attendre indéfiniment, les appareils informatiques peuvent comprendre un mécanisme de définition d'un délai de retransmission contrôlant le déclenchement d'une action. Par exemple, si aucune réponse n'a été reçue pendant la durée d'un délai retransmission, le message peut être renvoyé ou la connexion peut être fermée. La durée entre la réception de l'instruction d'envoi du message et la retransmission, aussi appelé délai de retransmission, est souvent basée sur le temps nécessaire pour recevoir une réponse (RTT pour RoundTrip Time en terminologie anglo-saxonne), correspondant aussi à la durée d'envoi puis de réception d'acquittement d'un message.

Le calcul haute performance, aussi appelé HPC (High Performance Computing en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en œuvre sur des réseaux d'interconnexion appelés clusters. L'objectif de ces clusters est de dépasser les limites du matériel existant en mutualisant des ressources pour permettre l'exécution parallélisée d'instructions et l'agrégation de capacité mémoire et de disque.

Un cluster, aussi appelé réseau d'interconnexion, est un ensemble de moyens de calcul (aussi appelés nœuds) interconnectés et échangeant des messages pour réaliser des opérations communes. Les clusters sont constitués d'un grand nombre de nœuds (typiquement plusieurs milliers), ces derniers étant interconnectés, par exemple de façon hiérarchique, par des commutateurs (typiquement plusieurs centaines), appelés switch en terminologie anglo-saxonne. Les nœuds correspondent à un ensemble d'équipements informatiques pouvant contenir des capacités de calcul ou/et de stockage et sont par exemple un serveur, un ordinateur ou plus généralement une machine.

Or, la taille des clusters augmentant de jour en jour, ces clusters doivent être en mesure de traiter plus de messages à des vitesses plus élevés. En général, la durée de transmission des messages a diminué mais elle reste variable en fonction des conditions du réseau notamment. Cela crée un défi pour la mise en œuvre d'un mécanisme de gestion de délai de retransmission sur un réseau d'interconnexion qui peut gérer les pertes de message tout en minimisant le nombre et la durée des échanges. Dans le contexte du développement des réseaux d'interconnexion, il est souhaitable d'avoir une faible latence et une gestion rapide des erreurs de transmissions. Le problème général est alors de bien fixer la valeur du délai de retransmission pour ne pas retransmettre trop souvent ou pas assez vite les messages. De plus, il serait souhaitable de pouvoir intégrer la prise en compte de la taille des messages dans la valeur du délai de retransmission.

Les mécanismes traditionnels de temporisation sont basés sur des délais de retransmission mis en œuvre dans un logiciel (WO2004010289 ; EP0777363). Des solutions logicielles permettent de réaliser des délais de retransmission adaptatifs en fonction de paramètres. Ainsi, le délai de retransmission correspond au temps courant auquel est additionné un délai d'attente et la valeur du délai d'attente (RTO - retransmit timeout en terminologie anglo-saxonne) varie en fonction des messages, généralement découpés en paquets de longueur identique, chaque paquet ayant son propre acquittement. Par exemple, certains documents proposent un RTO égal au RTT puis pour chaque acquittement reçu, le RTT est calculé et un nouveau RTO est calculé, le nouveau RTO étant fonction de la suite des derniers RTT. Ce type de solution est implémenté dans les couches logicielles des protocoles de transport. Néanmoins, ce genre de calculs ne peut se faire simplement dans une carte réseau via une implémentation matérielle. En outre, les implémentations de tels logiciels nécessitent une grande puissance informatique surtout dans le cas de réseau d'interconnexion. C'est notamment le cas lors de l'utilisation d'applications hébergées sur un nœud où il y a d'une part consommation d'une partie des ressources du nœud et d'autre part dépendance aux ressources disponibles sur le dit nœud pour la gestion de la retransmission des messages. Cela peut entrainer des dysfonctionnements dans le réseau d'interconnexion.

Depuis quelques années, s'est développé l'utilisation de cartes réseau pouvant prendre en charge une partie au moins de la transmission / retransmission des messages. Ainsi, pour pallier aux problèmes de consommation de ressources de calcul, certains réseaux d'interconnexion peuvent présenter des nœuds équipés de cartes réseau comportant plusieurs files d'attente d'émission et de réception. Le déplacement de certaines de ces fonctions sur un matériel dédié libère la puissance de calcul du nœud pour d'autres tâches. Ainsi, la retransmission est gérée par un dispositif matériel sur une carte réseau sans intervention logicielle. Néanmoins, les messages sont envoyés dans un ordre fixé par la couche logicielle qui utilise la carte (la carte ne peut pas réordonner) et il n'est pas possible de faire varier, via une implémentation matérielle, le délai d'attente de façon à bien fixer le délai de retransmission pour ne pas retransmettre trop souvent ou pas assez vite les messages. Classiquement, chaque message est ajouté dans la liste de transmission associé à un délai de retransmission T tel que T= délai d'attente + T du dernier message de la liste. Un inconvénient de telles méthodes est de ne pouvoir prendre en compte les caractéristiques des messages alors que ces dernières peuvent influer sur le RTT ou de ne pouvoir prendre en compte l'état du réseau qui peut évoluer à n'importe quel moment durant le traitement du message.

Ainsi, il existe un besoin pour de nouveaux dispositifs et méthodes pour la gestion dynamique de la retransmission de message dans un réseau d'interconnexion où ladite gestion est réalisée, via une implémentation matérielle, de façon à répondre aux problèmes engendrés par les méthodes existantes.

**[Problème technique]**

L'invention a donc pour but de remédier aux inconvénients de l'art antérieur. En particulier, l'invention a pour but de proposer un dispositif de gestion dynamique de la retransmission de message, ledit dispositif étant apte à permettre notamment, via une implémentation matérielle, de proposer une retransmission adaptative capable de varier en fonction des caractéristiques des messages telles que la longueur des messages à transmettre ou encore prendre en compte la congestion du réseau ainsi que les temps de traitement des messages à la source et à la destination. Le dispositif devant permettre cette gestion à partir d'une simple implémentation matérielle et sans nécessiter de calculs complexes consommateurs de ressources.

L'invention a en outre pour but de proposer un procédé de gestion dynamique de la retransmission de message, ledit procédé permettant une retransmission adaptative capable de varier en fonction notamment des caractéristiques des messages sans nécessiter de calculs complexes consommateurs de ressources.

**[Brève description de l'invention]**

A cet effet, l'invention porte sur un contrôleur d'interface réseau pour la gestion dynamique d'un délai de retransmission d'un message au sein d'un réseau d'interconnexion comportant une pluralité de nœuds, ledit contrôleur d'interface réseau étant apte à renvoyer un message si un délai de retransmission du message est dépassé, ledit contrôleur d'interface réseau étant caractérisé en ce qu'il comprend :

- un module de communication apte à recevoir, en provenance d'un nœud source, une instruction de transmission d'un message à un nœud cible, ladite instruction de transmission d'un message comportant des données caractéristiques du message,
- au moins une mémoire tampon de transmission apte à mémoriser au moins une partie des données caractéristiques du message et apte à l'associer à un délai de retransmission du message,
- un module de définition de ralentissement, ledit module de définition de ralentissement étant apte à définir une valeur du facteur de division à partir desdites données caractéristiques du message,
- une horloge de référence apte à générer un signal à fréquence fixe,
- au moins un diviseur de fréquence, ledit diviseur de fréquence étant apte à générer un signal à une fréquence réduite à partir de la valeur du facteur de division et du signal à fréquence fixe provenant de l'horloge de référence,
- au moins une horloge à fréquence réduite, ladite horloge à fréquence réduite étant associée à la mémoire tampon de transmission, ladite horloge à fréquence réduite étant apte à permettre de chronométrer le délai de retransmission à partir du signal à une fréquence réduite et étant apte à déclencher une retransmission du message si le délai de retransmission est dépassé.

Ainsi, la présente invention permet de gérer de façon dynamique le délai de retransmission d'un message au sein d'un réseau d'interconnexion et cela via une implémentation matérielle portée par un contrôleur d'interface réseau. Ce contrôleur d'interface réseau permet à partir d'un diviseur de fréquence, de faire varier la fréquence de l'horloge décomptant le temps au niveau d'une ou de plusieurs mémoires tampon de transmission et donc permet de faire varier le délai de retransmission. Ainsi, au lieu de calculer un délai d'attente différent pour chaque message, c'est l'écoulement du temps qui est modifié en fonction des caractéristiques du message et des messages en cours de transmission. C'est-à-dire que la vitesse de l'horloge à fréquence réduite peut varier en fonction des caractéristiques des messages en cours, l'horloge à fréquence réduite étant ainsi une l'horloge à fréquence réduite variable. Plus le facteur de division est élevé, plus la fréquence diminue et il y a donc un écoulement plus lent du temps tel que contrôlé par l'horloge à fréquence réduite. Un tel dispositif peut par exemple être utilisé pour gérer le moment de la retransmission d'un message en fonction des caractéristiques du message à envoyer. En outre, le contrôleur est apte, via un encodage matériel, à prendre en charge intégralement la gestion des transmissions et retransmissions de messages. Grâce à cela, les nœuds peuvent se consacrer exclusivement au calcul, pendant que les communications sont gérées de façon indépendante par le contrôleur d'interface réseau. Ainsi, contrairement à ce qui se passe avec d'autres technologies réseaux courantes, le contrôleur d'interface réseau peut fournir un débit très important même lorsque le système assure une lourde charge de calcul.

**Selon d'autres caractéristiques optionnelles du contrôleur :**

- lorsque le message a été transmis par le contrôleur d'interface réseau, le module de définition de ralentissement est configuré pour procéder à une modification de la valeur du facteur de division. Ainsi, la valeur du facteur de division est dynamique et dépend notamment des messages en cours dans la liste et de leur statut. Chaque message contribue selon son état (en cours de transmission, transmis) et ses caractéristiques à la définition de la valeur du facteur de division.

- le contrôleur est apte à lire des données à transmettre directement dans une mémoire du nœud source et le module de définition de ralentissement est configuré pour prendre en compte un temps de lecture des données à transmettre lors de la définition de la valeur du facteur de division. La capacité du contrôleur d'interface réseau à lire au moins une partie du contenu des messages dans la mémoire du nœud source pour les envoyer vers le nœud cible permet d'avantageusement réduire la consommation de ressources au niveau du nœud source.

- le contrôleur comporte au moins huit mémoires tampon de transmission chacune étant associée à un diviseur de fréquence et à une horloge à fréquence réduite. Cela permet aux différentes mémoires tampon de transmission de pouvoir gérer de façon indépendante le délai de retransmission de l'ensemble des messages à transmettre dont elles ont la gestion. Ainsi, il est possible d'adapter plus finement le délai de retransmission de messages enregistrés dans chacune des mémoires tampon de transmission. De préférence, le contrôleur comporte au moins seize mémoires tampon de transmission.

- la ou les données caractéristiques de message utilisées par le module de définition de ralentissement pour définir la valeur du facteur de division comportent :

  - la taille du message, par exemple mesurée en octets,
  - la présence de données à transmettre dans l'instruction,
  - la présence d'une adresse de début de zone à lire pour le nœud source et/ou le nœud cible,
  - la présence d'une adresse de tableau descripteur, ledit tableau descripteur comportant, de préférence lorsque les données à transmettre sont sur une zone fractionnée, l'adresse de début et la longueur de chaque fragment sur le nœud source et/ou le nœud cible,
  - la présence d'un adressage virtuel pour le nœud cible, et/ou
  - l'objet du message, à savoir si c'est une requête ou une réponse.
  Ces différentes caractéristiques vont avoir une influence sur le temps de traitement et/ou d'acheminement du message et il est ainsi avantageux que ces caractéristiques soient prises en compte lors de la définition de la valeur du facteur de division. De façon préférée, la ou les données caractéristiques comportent au moins quatre de ces éléments et de façon plus préférée la ou les données caractéristiques comportent l'ensemble de ces éléments.

- De façon préférée, la ou les données caractéristiques de message utilisées pour définir la valeur du facteur de division comportent la taille du message, par exemple mesurée en octets. Ainsi, le contrôleur permet de prendre en compte la longueur des messages à transmettre dans le délai de retransmission.

- la valeur du facteur de division est en outre calculée à partir de valeurs caractéristiques du réseau. De préférence, les valeurs caractéristiques du réseau sont associées au taux d'occupation/disponibilité du réseau. Le réseau étant composé d'une pluralité de canaux pouvant chacun être composés de plusieurs sections, le taux d'occupation/disponibilité du réseau peut être le taux d'occupation/disponibilité d'un canal ou d'une section du canal. Cela permet de prendre en compte, pour l'établissement du facteur de division et donc du moment de retransmission, l'état de congestion du réseau qui peut survenir à n'importe quel moment durant le traitement du message et qui ne dépend pas des caractéristiques du message. En outre, cette prise en compte peut être rendue possible via l'implémentation matérielle du contrôleur d'interface réseau selon l'invention et sans nécessiter de calculs complexes, notamment grâce au module de définition de ralentissement.

- la valeur du facteur de division est en outre calculée à partir d'une constante, la valeur de ladite constante étant telle qu'un signal à une fréquence réduite généré à partir de la valeur de ladite constante et du signal à fréquence fixe provenant de l'horloge de référence, correspondrait au temps nécessaire à un message pour faire un aller-retour sur le réseau d'interconnexion à vide. Cela permet d'établir une durée de base pouvant être modifiée ensuite par les caractéristiques de message et de réseau.

- le contrôleur est configuré de façon à ce que lorsque le message a été transmis, les données caractéristiques du message soient modifiées et un nouveau facteur de division soit calculé par le module de définition de ralentissement, ledit nouveau facteur de division étant calculé à partir de l'ancien facteur de division et des nouvelles données caractéristiques du message transmis. Ainsi, le facteur de division évolue constamment en fonction de la charge de chaque mémoire tampon de transmission et de la progression de délivrance des messages.

- le module de définition de ralentissement est configuré pour définir une nouvelle valeur du facteur de division lorsque l'acquittement du message a été reçu par le contrôleur d'interface réseau. Plus particulièrement, la valeur du facteur de division est modifiée de façon à ce qu'un message dont l'acquittement a été reçu ne vienne plus influer sur la valeur du facteur de division. Ainsi, de façon encore plus préférée, le module de définition de ralentissement est configuré pour annuler le facteur propre au message lorsque l'acquittement du message a été reçu par le contrôleur d'interface réseau. En effet, le message est terminé, il n'a donc plus d'influence sur la fréquence de l'horloge à fréquence réduite. Avantageusement, considérant que de nombreux messages sont envoyés simultanément, l'acquittement d'un message ne modifie pas les facteurs des autres messages en cours.

- le contrôleur est configuré de façon à ce que si une instruction de transmission d'un nouveau message est reçue par le module de communication, que ladite instruction comporte des données caractéristiques du nouveau message et qu'une partie des données caractéristiques du nouveau message sont enregistrées sur la mémoire tampon de transmission, alors une nouvelle valeur du facteur de division est calculée, ladite nouvelle valeur du facteur de division étant calculée, par le module de définition de ralentissement, à partir de l'ancien facteur de division et desdites données caractéristiques du nouveau message. Ainsi, la valeur du facteur de division augmente avec l'arrivée de nouveaux messages. Plus particulièrement, la valeur est modifiée si le nouveau message est géré par la même mémoire tampon de transmission que le premier message.

- le délai de retransmission est calculé à partir du temps courant tel que donné par la ou les horloges à fréquence réduite et d'un délai d'attente constant. Cela permet de conserver en mémoire le temps de transmission ou retransmission du message avec une consommation minimale de ressources.

Selon un autre aspect, la présente invention porte sur un procédé de gestion dynamique, par un contrôleur d'interface réseau, d'un délai de retransmission d'un message, au sein d'un réseau d'interconnexion comportant une pluralité de nœuds, de façon à renvoyer un message si un délai de retransmission du message est dépassé, ledit contrôleur d'interface réseau comportant un module de communication, un module de définition de ralentissement, une horloge de référence, au moins une mémoire tampon de transmission, au moins un diviseur de fréquence et au moins une horloge à fréquence réduite, ledit procédé comportant les étapes suivantes :

- réception en provenance d'un nœud source, par le module de communication, d'une instruction de transmission d'un message à un nœud cible, ladite instruction de transmission d'un message comportant des données caractéristiques du message,
- mémorisation, dans la mémoire tampon de transmission, d'au moins une partie des données caractéristiques du message et association de ladite partie des données caractéristiques du message à un délai de retransmission du message,
- définition, par le module de définition de ralentissement, d'une valeur du facteur de division à partir desdites données caractéristiques du message ; De préférence, au moins une desdites données caractéristiques du message est utilisée pour la définition de la valeur du facteur de division,
- génération, par le diviseur de fréquence, d'un signal à fréquence réduite à partir de la valeur du facteur de division et d'un signal à fréquence fixe provenant de l'horloge de référence, et
- décompte, par l'horloge à fréquence réduite associée à la mémoire tampon de transmission, du délai de retransmission à une fréquence égale à la fréquence du signal à fréquence réduite et
- déclenchement d'une retransmission du message si le délai de retransmission est dépassé.

Ce procédé permet à partir d'un diviseur de fréquence, de faire varier la fréquence de l'horloge décomptant le temps au niveau de la mémoire tampon de transmission et donc permet faire varier le moment de retransmission du message. Un tel procédé peut par exemple être utilisé pour faire varier le moment de retransmission en fonction des caractéristiques du message à envoyer. En outre, cela ne faisant pas appel aux capacités de calcul d'un nœud, le procédé n'a pas d'impact néfaste sur la disponibilité de ressources pour les calculs

Selon encore un autre aspect, l'invention porte sur un support lisible par ordinateur non transitoire (ou de type mémoire de masse) enregistré avec des instructions qui, lorsqu'elles sont exécutées par un ou plusieurs processeurs, amènent les un ou plusieurs processeurs pour exécuter le procédé selon l'invention.

D'autres avantages et caractéristiques de l'invention apparaitront à la lecture de la description suivante donnée à titre d'exemple illustratif et non limitatif, en référence aux Figures annexées qui représentent :

- Figure 1, un schéma d'un réseau d'interconnexion comportant une pluralité de nœuds, chaque nœud étant associé à un contrôleur d'interface réseau selon l'invention ;

- Figure 2, un diagramme schématique détaillé d'un nœud et du contrôleur d'interface réseau selon l'invention associé ;

- Figure 3, un diagramme schématique d'échanges de messages dans le temps entre un nœud source et des nœuds cibles ;

- Figures 4A à 4D, des diagrammes schématiques détaillés d'un contrôleur d'interface réseau comportant selon l'invention deux mémoires tampon de transmission. Les différentes figures présentant le contenu des mémoires tampon de transmission à différents temps ($t_a$, $t_b$, $t_c$ et $t_d$) en référence à la figure 3 ;

- Figure 5, une représentation schématique du procédé de gestion dynamique d'un délai de retransmission selon l'invention ;

- Figure 6, un organigramme d'une gestion dynamique d'un délai de retransmission selon l'invention ;

- Figure 7, une illustration des fréquences fixes et réduites selon l'invention ;

- Figure 8, une représentation schématique du décompte du délai de retransmission par une horloge à fréquence réduite selon l'invention.

**[Description de l'invention]**

Dans la suite de la description, le terme « délai de retransmission » signifie l'heure ou le moment jusqu'auquel un message peut attendre l'accusé de réception ou d'acquittement avant d'être considéré comme perdu. Le délai de retransmission peut correspondre au temps courant auquel est ajouté un délai d'attente.

L'expression «délai d'attente» signifie au sens de l'invention, une durée correspondant au délai entre la prise en charge d'un message et le moment où un accusé de réception devrait être reçu.

Le terme « renvoyer » signifie au sens de l'invention qu'un système tente de renvoyer un message après que le message a été considéré comme perdu en raison d'un délai d'attente trop long, c'est-à-dire supérieur au délai de retransmission, ou d'un accusé de réception négatif. Il peut exister une limite au nombre de fois qu'un message peut être renvoyé. Par exemple, le nombre de répétitions peut être limité à un maximum de six tentatives.

On entend, ici, par « réseau d'interconnexion », tout réseau de calcul dédié (tel qu'un réseau InfiniBand), ou plus généralement toute collection d'éléments informatiques, notamment des processeurs distribués, avec des liaisons de communication physiques entre eux.

Dans la suite de la description, on entend par « liste d'attente » ou « mémoire tampon de transmission », une mémoire où est enregistrée la liste des messages en cours de transmission ou transmis pour lesquelles un acquittement ou un accusé de réception n'a pas encore été reçu. Les messages sont généralement mis dans une liste d'attente ou mémoire tampon de transmission selon l'ordre de leur traitement et se basent sur un système FIFO (first in, first out en terminologie anglo-saxonne). Avantageusement, un contrôleur d'interface réseau selon l'invention comporte plusieurs listes d'attente sous la forme de conteneurs virtuels aussi appelées mémoires tampons de transmission. Ces listes peuvent par exemple être attribuées à un groupe de nœud ou à un type de message.

On entend par « acquittement », au sens de l'invention, un message envoyé par un nœud cible suite à la réception d'un message. Avantageusement, il y a un seul acquittement par message envoyé.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « opération exécutable », au sens de l'invention, une action effectuée par un dispositif ou un processeur sauf si le contexte indique autrement. Les exemples d'opérations exécutables incluent, mais sans s'y limiter, «traiter», «calculer», «déterminer», «afficher», «comparer» ou autre. À cet égard, les opérations se rapportent à des actions et / ou des processus d'un système de traitement de données, par exemple un système informatique ou un dispositif informatique électronique similaire, qui manipule et transforme les données représentées en tant que quantités physiques (électroniques) dans les mémoires du système informatique ou d'autres dispositifs de stockage, de transmission ou d'affichage de l'information.

Dans la suite de la description, les mêmes références sont utilisées pour désigner les mêmes éléments.

Les réseaux interconnectés utilisent généralement une courte durée pour les délais de récupération des erreurs de messages et procèdent rapidement à une réexpédition des envois échoués. Typiquement, dans un réseau d'interconnexion, la durée de temporisation totale est courte, par exemple, entre 50 et 500 millisecondes. Or tous les messages ne nécessitent pas la même durée pour être transmis au nœud cible ainsi un problème se produit pour les messages pour lesquels la durée du délai de retransmission est trop courte. Dans un réseau d'interconnexion, l'échec d'un chemin de connexion entraîne une défaillance d'une application qui utilise le chemin de connexion échoué, ce qui peut entraîner une dégradation des performances.

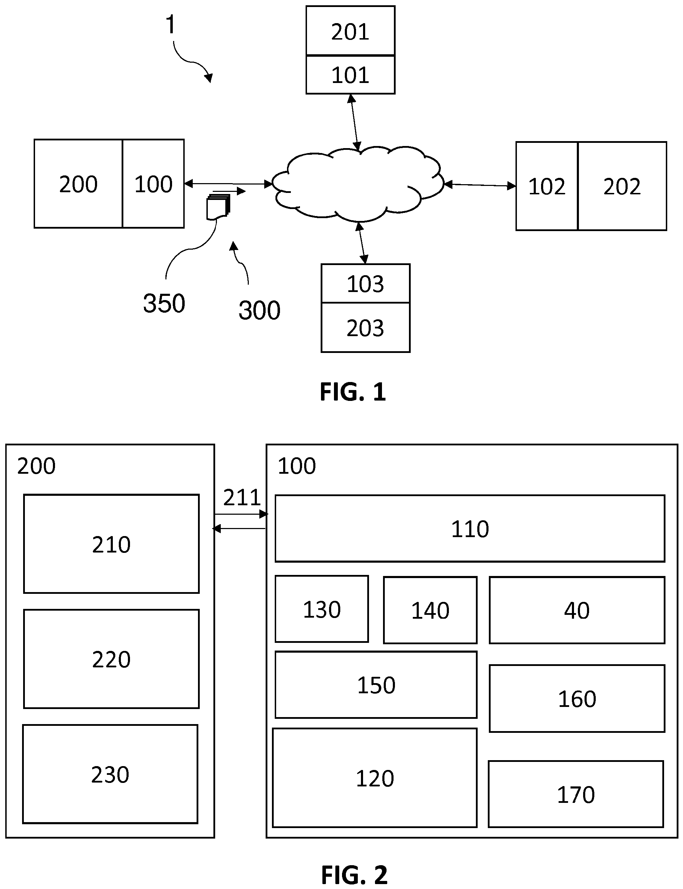

La **figure 1** schématise un réseau d'interconnexion 1 comportant une pluralité de nœuds 200, 201, 202, 203. Les nœuds 200 du réseau d'interconnexion 1 peuvent comporter un module de communication 210, un ou plusieurs processeurs 220 et de la mémoire 230. Chacun des nœuds est associé à un contrôleur d'interface réseau 100, 101, 102, 103 apte à envoyer un message 300. En outre, ce contrôleur d'interface réseau 100 est apte à renvoyer un message 300 si un délai de retransmission 20 du message 300 est dépassé.

Comme détaillé dans la **figure 2,** le **contrôleur d'interface réseau 100** peut être un dispositif séparé ou couplé avec un nœud 200. Le contrôleur d'interface réseau 100 peut être intégré dans un nœud 200 et partager des ressources avec le nœud 200, tels que des processeurs 220 et de la mémoire 230. De façon préférée et comme illustré, le contrôleur d'interface réseau 100 peut prendre la forme d'un dispositif (e.g. une carte réseau) comportant ses propres processeurs 160 et mémoire 170 (par exemple, carte PCIe, périphérique USB ou une carte fille). Le contrôleur d'interface réseau est avantageusement configuré pour pouvoir construire des messages à envoyer en lisant leurs données dans la mémoire d'un nœud source, les transmettre, faire le suivi des messages en cours, réceptionner des messages en provenance d'autres nœuds et générer des réponses (e.g. message de lecture ou écriture de données). Grace à cela et aux autres caractéristiques détaillées ici, il est permet une gestion dynamique et efficace du transport de bout en bout avec retransmission en cas de perte de message.

Le contrôleur d'interface réseau 100 peut comprendre une combinaison de matériel et de logiciel (par exemple, un micrologiciel) pour fournir à un nœud 200 un accès physique à un canal de communication du réseau d'interconnexion 1. Le canal de communication peut être basé sur une connexion filaire ou sans fil. Chaque contrôleur d'interface réseau 100 peut comprendre un ou plusieurs processeurs 160 qui peuvent être avantageusement des circuits intégrés de type ASIC (application-specific integrated circuit en terminologie anglo-saxonne) et être couplés à des bibliothèques de communication telles que MPI (Message Passing Interface en terminologie anglo-saxonne) et PGAS (Partitioned Global Address Space en terminologie anglo-saxonne). Les processeurs 160 peuvent être couplés à la mémoire 170, qui peut être capable de stocker des instructions lisibles par ordinateur et des données. La mémoire 170 du contrôleur 100 peut stocker des informations accessibles par les processeurs 160 comprenant des instructions pouvant être exécutées par les processeurs 160. Par exemple, la mémoire 170 peut comprendre des données qui peuvent être récupérées, manipulées ou stockées par des processeurs 160. La mémoire 170 et les autres mémoires décrites ici peuvent être tout type de stockage capable de stocker des informations accessibles par le processeur concerné, tel qu'un lecteur de disque dur, un lecteur à état solide, une carte mémoire, de la mémoire vive ou morte.

Le contrôleur d'interface réseau 100 comporte un **module de communication** 110 apte à recevoir, en provenance d'un nœud source 201, une instruction 211 de transmission d'un message. Les instructions 211 peuvent être un ensemble d'instructions à exécuter par les processeurs 160. Les instructions peuvent être stockées dans un format de code objet pour un traitement immédiat par un processeur, ou dans une autre langue prise en charge par le contrôleur d'interface réseau, y compris des scripts. Les instructions 211 de transmission comporte généralement des données caractéristiques 350 du message. Ces données caractéristiques 350 peuvent être récupérées, stockées ou modifiées par le contrôleur d'interface réseau 100 en conformité avec les instructions 211. Les données peuvent comprendre des informations suffisantes pour identifier les informations pertinentes dans une mémoire d'un nœud, telles que des numéros, des identifiants, du texte descriptif, des codes de propriété, des références à des données stockées dans d'autres mémoires ou des données qui sont utilisées par une fonction pour calculer les données pertinentes. Les instructions vont contenir des données différentes en fonction de leur objectif. Typiquement, une instruction 211 pour un message d'écriture de données 311 pourra comporter les données suivantes :

- La longueur des données à lire dans la mémoire du nœud source, ou la taille du message, par exemple mesurée en octets
- La position des données à lire. Par exemple, les données peuvent être dans une zone contiguë de la mémoire ou bien dans une zone fractionnée. Si c'est une zone contiguë, l'instruction 211 comportera une adresse de début de la zone alors que si c'est une zone fragmentée, l'instruction 211 comportera l'adresse d'un tableau descripteur dont chaque élément contient une adresse de début d'un fragment et sa longueur (un tel tableau est appelé IOVEC pour vectored I/O en terminologie anglo-saxxonne),
- Le type d'adressage dans la mémoire. En effet, l'adressage peut être physique ou virtuel et s'il est virtuel il existe un risque de faire des défauts de page.
- Un identifiant pour le nœud cible et éventuellement un port particulier dans ce nœud. Par exemple l'instruction peut comporter des identifiants de type LID (Local Identifier en terminologie anglo-saxonne) ou des identifiants de type GID (Global Identifier en terminologie anglo-saxonne) composé d'un préfix et d'un identifiant de port GUID (Global unique identifiers en terminologie anglo-saxonne),
- La position où écrire les données dans le nœud cible. Comme précédemment, ça peut être dans une zone contiguë ou fragmentée.

Alternativement, une instruction pour un message de lecture de données 321 pourra comporter les données suivantes :

- La longueur des données à lire dans la mémoire du nœud cible,
- La position des données à lire dans le nœud cible, Comme précédemment, ça peut être dans une zone contiguë ou fragmentée.
- Le type d'adressage dans la mémoire. En effet, l'adressage peut être physique ou virtuel et s'il est virtuel il existe un risque de faire des défauts de page.
- La position où écrire les données dans le nœud source, comme précédemment, ça peut être dans une zone contiguë ou fragmentée.
- Un identifiant pour le nœud cible de façon similaire à un message d'écriture de données.

Un message 300 (par exemple, 311, 312, 321, 322, 331, 341, 351) peut être tout message susceptible de, ou configuré pour, être envoyé sur un canal de communication du réseau d'interconnexion. Les messages peuvent, par exemple, comporter des données ou bien une requête pour des données hébergées par un nœud cible. Les messages peuvent également comporter une demande de données applicatives, c'est-à-dire des données devant être générées par le nœud cible. Les messages 300 peuvent être formatés pour supporter un protocole de communication propriétaire ou un protocole standard de l'industrie (par exemple, IP, TCP, UDP). En outre, le contrôleur 100 est apte à envoyer le message avec un seul signal de fin de message. De plus, le contrôleur 100 est avantageusement apte à recevoir un acquittement unique quel que soit la taille du message. Cela permet d'économiser la bande passante du réseau en ayant une réponse unique pour tout le message au lieu d'une pluralité d'acquittements correspondant à un acquittement pour chaque paquet du message. Ainsi, les messages 300 à envoyer sont découpés en paquets envoyés en file indienne où seul le premier paquet comporte un en-tête de routage. Par exemple, avantageusement, seul le premier paquet du message 300 envoyé par le contrôleur 100 comporte un en-tête de routage. En effet, le contrôleur 100 est apte à transmettre les paquets exclusivement par l'intermédiaire d'un chemin dédié entre la source et la cible suite à la réception par la cible du premier paquet. En outre, ledit chemin dédié est fermé après que le contrôleur 100 cible ait reçu le dernier paquet. De telles caractéristiques, relatives à deux couches des protocoles de transmission : le niveau applicatif (message) et le niveau transport (paquet), permettent d'optimiser la bande passante du réseau et notamment de réduire la consommation de la bande passante du réseau.

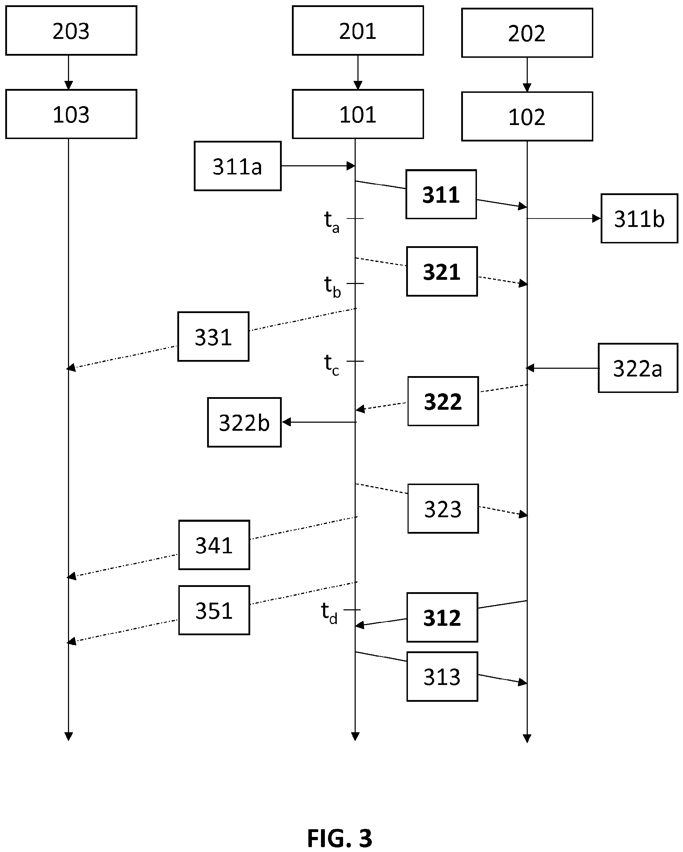

La **figure 3** représente une succession de transmission de message dans le temps entre un nœud source 201 et deux nœuds cibles 202, 203.

Le message 311 est un message d'écriture de données, visant à écrire sur une mémoire du nœud 202 des données contenues dans une mémoire du nœud 201. Ainsi, il s'agit de lire 311a des données dans la mémoire du nœud source 201, les transférer au nœud cible 202 et les écrire 311b dans la mémoire du nœud cible 202. Quand l'écriture est finalisée, le nœud 202 envoie, via son contrôleur d'interface réseau 102, un message de réponse de complétion 312 au nœud source 201. A la réception du message de complétion 312, le nœud source 201 envoie un accusé de réception 313 au nœud source 202.

Comme représenté à la figure 3, en parallèle de cette transmission du message 311 d'écriture de données, le nœud source 201 a envoyé au même nœud cible 202 un message de lecture de donnée 321. Il s'agit de lire 322a des données dans la mémoire du nœud cible 202, les transférer au nœud source 201 et les écrire 322b dans la mémoire du nœud source 201. A la réception du message de réponse 322 du nœud cible 202 vers le nœud source 201 et après l'écriture des données, le nœud source 201 envoie un acquittement 323 au nœud cible 202. La figure 3 montre également l'envoie de plusieurs messages 331, 341, 351 par le nœud source 201 vers un autre nœud cible 203.

Selon un mode de réalisation, le contrôleur d'interface réseau 100 comporte au moins **une mémoire tampon de transmission 120** apte à mémoriser des données de réseau telles qu'une partie des messages à transmettre. Le contrôleur de réseau comporte également **un module de définition de ralentissement 130** apte à définir une valeur du facteur de division à partir desdites données caractéristiques 350 d'un message à transmettre. Le contrôleur de réseau comporte également **au moins un diviseur de fréquence 140**. Le contrôleur de réseau comporte également **une horloge de référence 40** qui de préférence peut fournir une précision de l'ordre de la microseconde ou moins. Enfin, le contrôleur de réseau comporte également **au moins une horloge à fréquence réduite 150.**

L'invention repose notamment sur le fait qu'au lieu de calculer un délai d'attente par message, le contrôleur d'interface réseau utilise un délai d'attente fixe mais la vitesse de l'horloge est adapté aux messages en cours de transmission. Cette vitesse d'horloge est notamment générée par l'au moins une **horloge à fréquence réduite 150.** Le contrôleur d'interface réseau 100 comporte une horloge de référence 40 générant un signal à une fréquence fixe. Avantageusement, le contrôleur d'interface réseau 100 comporte une horloge **à fréquence réduite 150** par mémoire tampon de transmission, ou liste de message en cours, dont la fréquence est dérivée à partir de la fréquence de l'horloge de référence et d'une valeur du facteur de division. Le calcul peut par exemple prendre la forme suivante :

$$\text{fréquence de l'horloge à fréquence réduite} = \text{fréquence de l'horloge de référence} \;/\; \text{valeur du facteur de division.}$$

Le facteur de division étant apte à être modifié en fonction du temps, l'horloge à fréquence réduite 150 est également une horloge à fréquence réduite 150 variable.

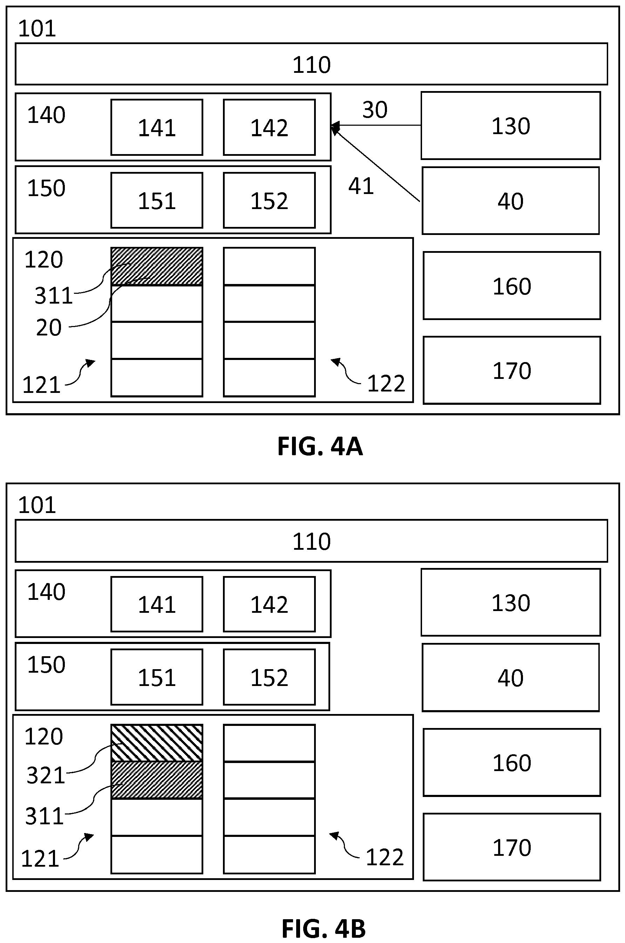

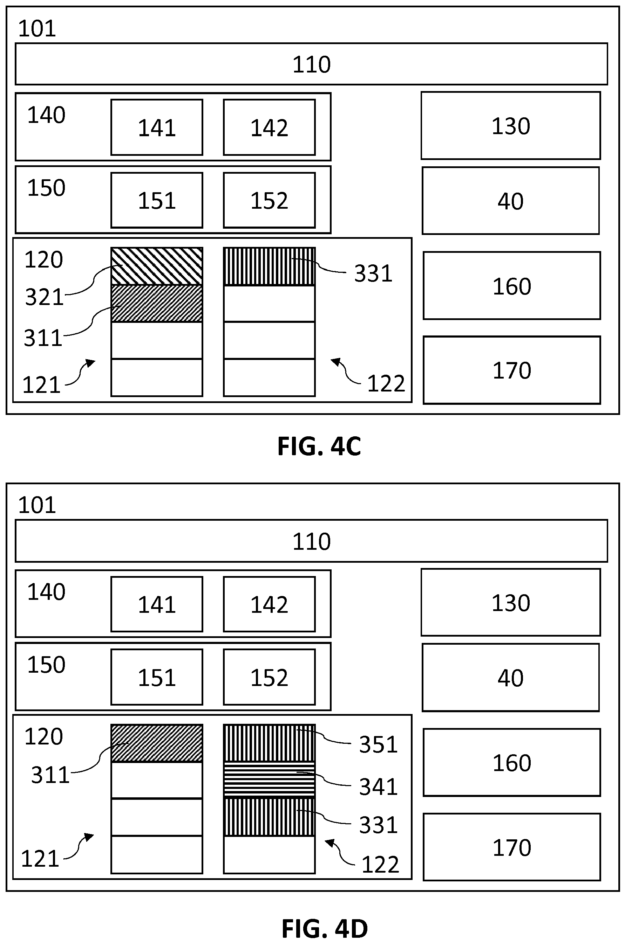

Les **figures 4** représentent le contrôleur d'interface réseau et plus particulièrement le contenu des mémoires tampon de transmission 120 en fonction de la progression dans le temps (figure 4A : $t_a$, figure 4B : $t_b$, figure 4C : $t_c$, figure 4D : $t_d$). Comme illustré à la figure 4A, le contrôleur d'interface réseau 100 dans un arrangement selon l'invention peut comprendre deux mémoires tampon 121, 122 de transmission, chacune étant couplée à une horloge à fréquence réduite 151, 152 et un diviseur de fréquence 141, 142.

Sur la figure 4A, la première mémoire tampon 121 de transmission, dédiée au nœud 201, comporte au moins une partie des données caractéristiques du message 311 associée à un délai de retransmission du message.

Sur la figure 4B, la première mémoire tampon 121 de transmission, dédiée au nœud 201, comporte au moins une partie des données caractéristiques du message 311 associée à un délai de retransmission du message 311 ainsi qu'au moins une partie des données caractéristiques du message 321 associée à un délai de retransmission du message 321.

Sur la figure 4C, la première mémoire tampon 121 de transmission, dédiée au nœud 201, comporte les mêmes données qu'à la figure 4B tandis que la seconde mémoire tampon 122 de transmission, dédiée au nœud 202 comporte au moins une partie des données caractéristiques du message 331 associée à un délai de retransmission du message 331.

Sur la figure 4D, la première mémoire tampon 121 de transmission, dédiée au nœud 201, comporte seulement, au moins une partie des données caractéristiques du message 311 associée à un délai de retransmission du message 311. En effet, la réponse 322 ayant été réceptionnée, l'au moins une partie des données caractéristiques du message 321 a été supprimée de mémoire tampon 121 de transmission. La seconde mémoire tampon 122 de transmission, dédiée au nœud 202 comporte quant à elle au moins une partie des données caractéristiques des messages 331, 341 et 351 associée à un délai de retransmission des messages 331, 341, et 351. Les messages restent dans leur liste de messages en cours, ou mémoire tampon de transmission jusqu'à réception de leurs réponses respectives. Quand l'horloge à fréquence réduite associée à ladite mémoire tampon atteint un temps supérieur au délai de retransmission, sans avoir reçu la réponse, le message est retransmit, il bénéficie d'un nouveau horodatage égal au temps courant de l'horloge à fréquence réduite 150 et il est placé en queue de liste de messages en cours.

Etant donné que chaque mémoire tampon de transmission est associé à une horloge à fréquence réduite, le contrôleur d'interface réseau 100 est apte à gérer les délais de retransmission de façon différentielle entre les mémoires tampon de transmission. Ainsi, il est possible que les délais de retransmission de messages enregistrés dans une mémoire tampon de transmission soient beaucoup plus courts et cela en fonction des messages transmis mais également des caractéristiques des nœuds de cibles.

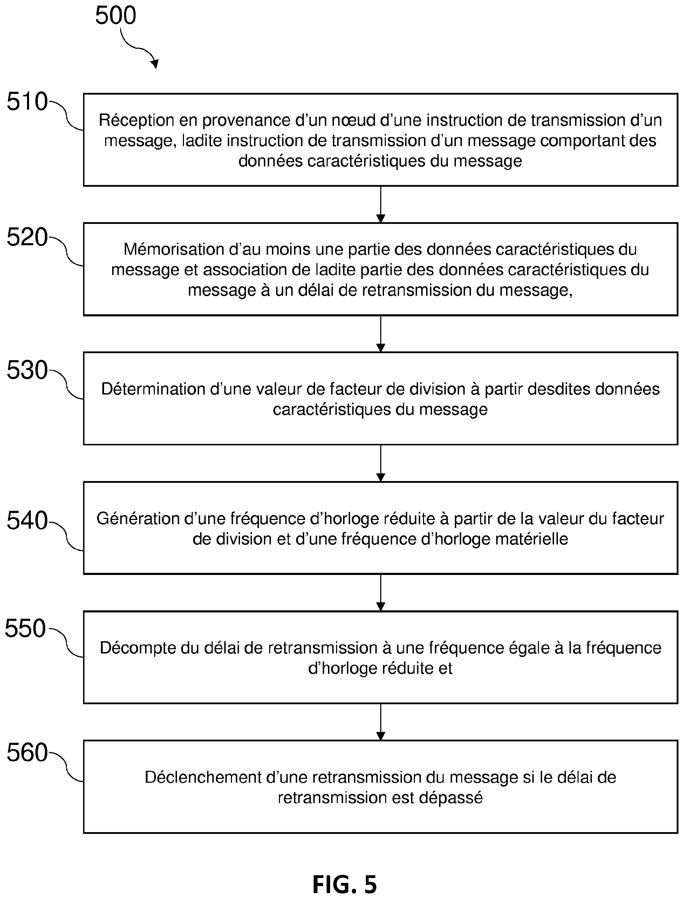

La **figure 5** est une représentation schématique d'un exemple de procédé 500 de gestion dynamique, d'un délai de retransmission d'un message selon l'invention.

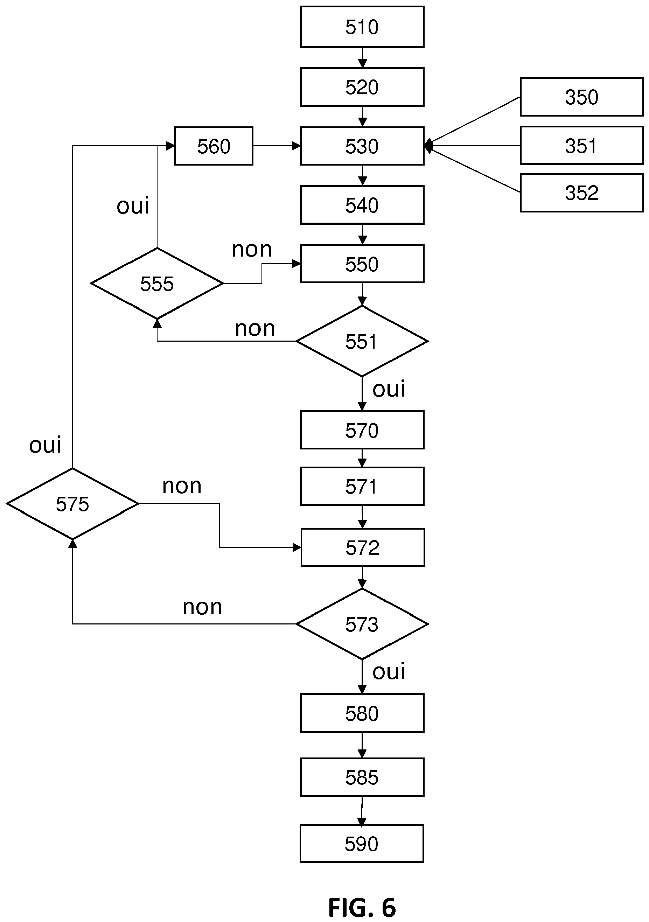

La **figure 6,** vient détailler ce procédé en proposant un organigramme d'une gestion dynamique d'un délai de retransmission selon l'invention.

Le procédé débute par une étape 510 de réception en provenance d'un nœud d'une instruction 211 de transmission d'un message 311 d'écriture de données, ladite instruction 211 de transmission d'un message comportant des données 350 caractéristiques du message 311.

Suite à cette réception, le contrôleur d'interface réseau 100, procède à une mémorisation 520 d'au moins une partie des données 350 caractéristiques du message 311 et associe de ladite partie des données 350 caractéristiques du message à un délai de retransmission 20 du message. Ce délai de retransmission 20 du message peut être composé d'une indication du temps courant qui est additionnée d'un délai d'attente fixe. En outre, de façon préférée, chaque fois qu'un message est mémorisé dans une mémoire tampon de transmission, il est horodaté, c'est-à-dire qu'il est enregistré en association avec la valeur courante l'horloge de référence 40.

Ensuite, le contrôleur d'interface réseau 100, via un module de définition de ralentissement 130, procède à une définition 530 d'une valeur du facteur de division 30 à partir desdites données 350 caractéristiques du message 311. Comme présenté en figure 6, cette détermination peut être réalisée à partir de desdites données 350 caractéristiques du message 300 en combinaison avec des données de congestion 351 réseau et une valeur constante 352.

Ainsi, le moment de la retransmission d'un message va dépendre des caractéristiques du message mais aussi des informations de l'état courant du réseau. Par exemple, dans certains cas, l'envoi du message nécessite ou non la lecture de données sur le nœud source. Si oui, le moment de la retransmission doit dépendre de la longueur des données mais également d'autres facteurs tels que les zones de distribution des données. Pour cela, les paramètres du message sont pris en compte pour la détermination de la valeur du facteur de division. De même, le moment de la retransmission d'un message peut être influencé par les actions ou calculs à effectuer sur le nœud cible

En outre, le temps de propagation du message depuis le nœud source jusqu'au nœud cible doit avantageusement être pris en compte. En effet, celui-ci peut varier fortement en fonction de la congestion du réseau.

Enfin, dans certains cas, la réponse au message peut être elle-même être soumise à un délai de retransmission. Par exemple si un message attend une réponse elle-même retransmise en cas de dépassement du délai de retransmission, il faut laisser plus de temps avant de retransmettre le message.

De façon plus particulière, plusieurs données caractéristiques de message peuvent être utilisées pour définir la valeur 30 du facteur de division :

- la taille du message, par exemple mesurée en octets,
- la présence de données à transmettre dans l'instruction, c'est le cas par exemple lors d'Entrée / Sortie programmées, où l'instruction comporte déjà les données à transmettre qui sont de faible taille (Programmed input/output en terminologie anglo-saxonne)
- la présence d'une adresse de début de zone à lire pour le nœud source et/ou le nœud cible. En effet, dans ce cas, la valeur du facteur de division prendra en compte le débit d'accès à la mémoire du nœud source.
- la présence d'une adresse de tableau descripteur comportant, lorsque les données à transmettre sont sur une zone fractionnée, l'adresse de début et la longueur de chaque fragment pour le nœud source et/ou le nœud cible. En effet, dans le cas de zone fractionnée, la valeur du facteur de division prendra en compte le ralentissement dû à la lecture du tableau descripteur (IOVEC Vectored I/O en terminologie anglo-saxonne) et la taille moyenne d'un segment tel que défini dans le tableau descripteur.
- la présence d'un adressage virtuel pour le nœud cible. En effet, dans le cas d'adressage virtuel, la valeur du facteur de division prendra en compte le ralentissement dû aux défauts de page, correspondant de préférence au temps nécessaire à résoudre un défaut de page ainsi que de la probabilité d'en faire un et la taille d'une page (de préférence une puissance de 2).
- l'objet du message : requête ou réponse. En effet, dans le cas d'une requête, la valeur du facteur de division prendra en compte un ralentissement à appliquer considérant le temps de traitement moyen d'une requête par rapport à une réponse.

Une telle latitude permet de façon simple, étant donné qu'il n'y a action que sur un paramètre (la valeur du facteur de division 30) d'adapter finement le délai de retransmission aux caractéristiques du message telle que la taille du message à envoyer.

Avantageusement, la ou les données caractéristiques de message utilisées pour définir le facteur de division comportent la présence d'une adresse de début de zone à lire pour le nœud source et/ou le nœud cible, et la présence d'une adresse de tableau descripteur comportant, lorsque les données à transmettre sont sur une zone fractionnée, l'adresse de début et la longueur de chaque fragment pour le nœud source et/ou le nœud cible. Ainsi, il est possible de prendre en compte pour l'établissement du facteur de division et donc du moment de retransmission, le temps de traitement au niveau du nœud cible ou du nœud source. Cela via une implémentation matérielle et sans nécessiter de calculs complexes.

Une fois la valeur du facteur de division 30 déterminée, le procédé comporte une étape de génération 540 d'un signal à fréquence réduite 42a à partir de la valeur du facteur de division 30 et d'un signal de fréquence fixe provenant de l'horloge de référence 40.

Ce signal à une fréquence réduite 42a est utilisé par une horloge à fréquence réduite associée à la mémoire tampon de transmission dans laquelle a été enregistrée au moins une partie des données caractéristique du message. Il permet de procéder au décompte 550 du délai de retransmission 20 à une fréquence égale à la fréquence du signal à fréquence réduite, provenant du diviseur de fréquence 140.

Ensuite, le message 311 étant un message d'écriture de données, le contrôleur d'interface réseau 100 procède à une étape de vérification 551 que le message 311 ait été transmis. Si le message n'a pas été transmis alors le contrôleur d'interface réseau 100 procède à une étape de vérification 555 que le délai de retransmission n'a pas été dépassé. Si le délai de retransmission a été dépassé alors le message est envoyé en queue de liste pour le déclenchement 560 d'une retransmission du message. Si le délai de retransmission n'a pas été dépassé alors le décompte 550 continue.

Lorsque le message 311 a été transmis par le contrôleur d'interface réseau, le module de définition de ralentissement 130 procède avantageusement à une modification 570 de la valeur du facteur de division. Ainsi, la valeur du facteur de division est dynamique et dépend notamment des messages en cours dans la liste et de leur statut. Chaque message contribue selon son état (en cours de transmission, transmis) et de ses caractéristiques à la définition de la valeur du facteur de division.

Une fois la nouvelle valeur du facteur de division 31 déterminée, le procédé comporte une étape de génération 571 d'un deuxième signal à fréquence réduite 42b à partir de la nouvelle valeur du facteur de division 31 et d'un signal de fréquence fixe provenant de l'horloge de référence. Ensuite, un décompte 572 équivalant au décompte 550 du délai de retransmission 20 à une fréquence égale à la fréquence du nouveau signal à fréquence réduite 42b est amorcé.

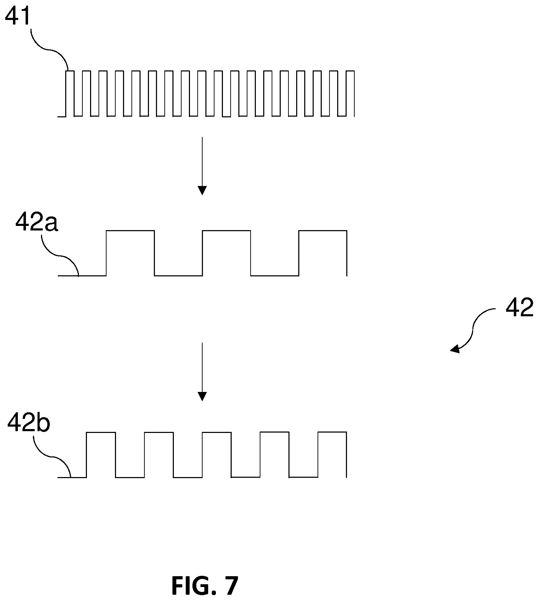

A titre d'illustration, la **figure 7** représente la fréquence de référence 41, la première fréquence réduite 42a et la seconde fréquence réduite 42b.

Le contrôleur d'interface réseau 100 procède alors à une étape de vérification 573 que la réponse au message 311 ait été reçue. Si la réponse n'a pas été reçue alors le contrôleur d'interface réseau 100 procède à une étape de vérification 575 que le délai de retransmission n'a pas été dépassé. Si le délai de retransmission a été dépassé alors le message est envoyé en queue de liste pour une nouvelle transmission. Si le délai de retransmission n'a pas été dépassé alors le décompte 572 continu.

Lorsque la réponse a été reçue par le contrôleur d'interface réseau 100, le contrôleur d'interface réseau procède à l'envoi 580 d'un message d'accusé réception ou d'acquittement au nœud cible et à une suppression 585 des données de message de la mémoire tampon de transmission.

Ensuite, le module de définition de ralentissement 130 procède avantageusement à une étape de modification 590 de la valeur du facteur de division. Lors de cette étape, la valeur du facteur de division est réduite. Ainsi, encore une fois, la valeur du facteur de division est dynamique et dépend notamment des messages en cours dans la liste et de leur statut.

En outre, le contrôleur peut être avantageusement configuré de façon à ce que si le nœud source 201 attend une réponse applicative alors le contrôleur d'interface réseau 100 est apte à recevoir depuis le nœud cible 202 un message d'acquittement de réception comportant la réponse applicative. Dans ce cas, le temps de génération de la réponse applicative est pris en compte lors de la définition de la valeur du facteur de division. Cela permet de faire de l'optimisation dans le nombre de message. En effet, si un message attend une réponse avec des données applicatives, on fusionne l'acquittement de réception avec la réponse applicative. La valeur du facteur de division prend en compte cela de façon à ce que le délai de retransmission ne dépende pas uniquement du réseau mais aussi du traitement du message au nœud destination.

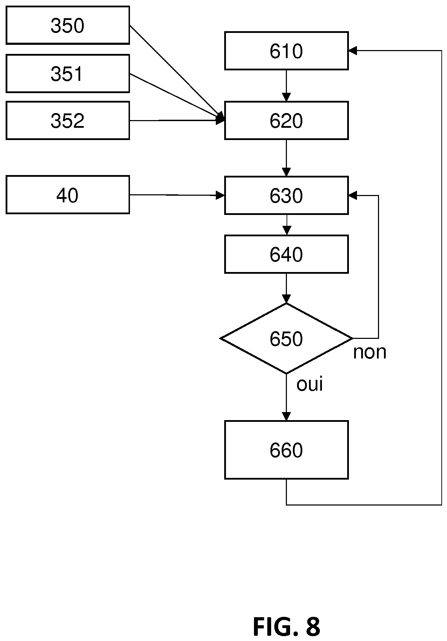

La **figure 8** est une représentation schématique d'une étape de décompte du délai de retransmission par une horloge à fréquence réduite selon l'invention. Selon un mode de réalisation, cette étape peut être subdivisée en plusieurs sous étapes.

L'étape 610 correspond à la remise à zéro d'un compteur géré par un diviseur de fréquence 140 selon l'invention. L'étape 620 correspond à la définition de la valeur du facteur de division 30. Cette étape est équivalente à l'étape 530 décrite précédemment.

L'étape 630 correspond à la réception, par le diviseur de fréquence 140, d'un signal de l'horloge de référence 40 correspondant au signal à fréquence fixe 41. La réception de ce signal entraine l'incrémentation 640 du compteur géré par le diviseur de fréquence 140.

Le contrôleur d'interface réseau procédé alors à une étape 650 de comparaison de la valeur du compteur géré par le diviseur de fréquence 140 à la valeur du facteur de division 30. Si la valeur du compteur géré par le diviseur de fréquence 140 est supérieur ou égale à la valeur du facteur de division 30 alors, le diviseur de fréquence 140 émet 660 un signal vers une horloge à fréquence réduite 150 selon l'invention puis le compteur géré par le diviseur de fréquence 140 est remis 610 à zéro.

La réception par l'horloge à fréquence réduite 150 du signal émis par le diviseur de fréquence 140 permet de produire la fréquence réduite 42.

La valeur du facteur de division est dynamique. Dans les exemples ci-après elle est notée F msg et est dépendante des données caractéristiques des messages 300 en cours dans la liste (ou mémoire tampon de transmission). Chaque message contribue selon son état (en cours de transmission, transmis) et ses caractéristiques. La modification de F_msg en fonction du statut des messages peut s'écrire, à titre d'exemple, selon le code illustré dans le tableau ci-dessous.

Tableau 1. Illustration de calcul de la valeur du facteur de division.

| | | |
|---|---|---|
| Message en écriture de données | En cours de transmission : | $F\_msg = F\_msg + (L/page\_size)*mem\_f + (iovec\ ?\ iovec\_f :0)*L/iovec\_size + (virtuel\ ?\ pf\_f : 0)*L/(page\_size) + req\_f.$ |
| | Transmission terminée | $F\_msg = F\_msg - (L/page\_size)*mem\_f.$ |
| | Réponse reçue | $F\_msg = F\text{-}msg - (iovec\ ?\ iovec\_f :0)*L/iovec\_size - (virtuel\ ?\ pf\_f : 0)*L/(page\_size) - req\_f.$ |
| Message en lecture de données | En cours de transmission : | $F\_msg = F\_msg + req\_f.$ |
| | Transmission terminée | $F\_msg = F\_msg + (L/page\_size)*mem\_f + (iovec\ ?\ iovec\_f :0)*L/iovec\_size + (virtuel\ ?\ pf\_f : 0)*L/(page\_size).$ |
| | Réponse reçue | $F\_msg = F\text{-}msg - (L/page\_size)*mem\_f - (iovec\ ?\ iovec\_f : 0)*L/iovec\_size - (virtuel\ ?\ pf\_f : 0)*L/(page\_size) - req\_f.$ |
| Réponse | En cours de transmission | $F\_msg = F\_msg + (L/page\_size)*mem\_f + (iovec\ ?\ iovec\_f :0)*L/iovec\_size + (virtuel\ ?\ pf\_f : 0)*L/(page\_size)$ |
| | Transmission terminée | $F\_msg = F\_msg - (L/page\_size)*mem\_f$ |
| | Réponse reçue | $F\_msg = F\text{-}msg - (iovec\ ?\ iovec\_f :0)*L/iovec\_size - (virtuel\ ?\ pf\_f : 0)*L/(page\_size$ |

Avec

L : Longueur du message en octets,
page_size : la taille d'une page (e.g. puissance de 2),
mem_f : paramètre associé au débit d'accès à la mémoire, par page,
iovec ? : recherche de la présence ou non d'iovec,
iovec_f : paramètre définissant le ralentissement dû à la lecture des iovecs,
iovec_size : paramètre associé à la taille moyenne d'un segment d'iovec (e.g. puissance de 2),
virtuel ? : recherche de la présence ou non d'un adressage virtuel,
pf_f : paramètre définissant le ralentissement dû aux défauts de page, avantageusement pf_f dépend du temps nécessaire à résoudre un défaut de page ainsi que de la probabilité d'en faire un,
page_size : la taille d'une page (e.g. une puissance de 2), et
req_f : facteur définit le ralentissement à appliquer pour une requête.

Ainsi, le contrôleur d'interface réseau 100 selon l'invention et le procédé de gestion dynamique de délai de retransmission selon l'invention permettent d'adapter finement le moment de retransmission d'un message en fonction des caractéristiques du message mais également d'autres caractéristiques. En outre, cela est possible en l'absence de calculs complexes et sur la base de diviseurs de fréquence et d'horloge à fréquence réduite.

Tous ces avantages contribuent donc à réduire les risques de pertes de messages tout en améliorant la performance d'un réseau d'interconnexion.

**Revendications**

1. Contrôleur d'interface réseau (100) pour la gestion dynamique d'un délai de retransmission (20) d'un message (300) au sein d'un réseau d'interconnexion (1) comportant une pluralité de nœuds (200), ledit contrôleur d'interface réseau (100) étant apte à renvoyer un message (300) si un délai de retransmission (20) du message (300) est dépassé, ledit contrôleur d'interface réseau (100) comprenant :

- un module de communication (110) apte à recevoir, en provenance d'un nœud source (201), une instruction de transmission d'un message à un nœud cible, ladite instruction (211) de transmission d'un message comportant des données caractéristiques (350) du message,

- au moins une mémoire tampon (120) de transmission apte à mémoriser au moins une partie des données caractéristiques (350) du message et apte à l'associer à un délai de retransmission (20) du message, le contrôleur d'interface réseau étant **caractérisé en ce qu'**il comprend :

- un module de définition (130) de ralentissement, ledit module de définition de ralentissement étant apte à définir une valeur (30) du facteur de division à partir desdites données caractéristiques (350) du message,
- une horloge de référence (40) apte à générer un signal à fréquence fixe (41),
- au moins un diviseur de fréquence (140), ledit diviseur de fréquence (140) étant apte à générer un signal à une fréquence réduite (42) à partir de la valeur (30) du facteur de division et du signal à fréquence fixe (41) provenant de l'horloge de référence (40),
- au moins une horloge à fréquence réduite (150), ladite horloge à fréquence réduite (150) étant associée à la mémoire tampon (120) de transmission, ladite horloge à fréquence réduite (150) étant apte à permettre de chronométrer le délai de retransmission (20) à partir du signal à une fréquence réduite (42) et étant apte à déclencher une retransmission du message (300) si le délai de retransmission (20) est dépassé.

2. Contrôleur d'interface réseau (100) selon la revendication 1 **caractérisé en ce que**, lorsque le message (300) a été transmis par le contrôleur d'interface réseau (100), le module de définition de ralentissement (130) est configuré pour procéder à une modification de la valeur (30) du facteur de division.

3. Contrôleur d'interface réseau (100) selon l'une des revendications 1 ou 2, **caractérisé en ce qu'**il est apte à lire des données à transmettre directement dans une mémoire du nœud source (201) et **en ce que** le module de définition de ralentissement (130) est configuré pour prendre en compte un temps de lecture des données à transmettre lors de la définition de la valeur (30) du facteur de division.

4. Contrôleur d'interface réseau (100) selon l'une quelconque des revendications 1 à 3, **caractérisé en ce qu'**il comporte au moins huit mémoires tampon (120) de transmission chacune étant associée à un diviseur de fréquence (140) et à une horloge à fréquence réduite (150).

5. Contrôleur d'interface réseau (100) selon l'une quelconque des revendications 1 à 4, **caractérisé en ce que** la ou les données caractéristiques (350) de message utilisées, par le module de définition (130) de ralentissement, pour définir la valeur (30) du facteur de division comportent :

- la taille du message, par exemple mesurée en octets,
- la présence de données à transmettre dans l'instruction,
- la présence d'une adresse de début de zone à lire pour le nœud source et/ou le nœud cible,
- la présence d'une adresse de tableau descripteur comportant, lorsque les données à transmettre sont sur une zone fractionnée, l'adresse de début et la longueur de chaque fragment sur le nœud source et/ou le nœud cible,
- la présence d'un adressage virtuel pour le nœud cible, et/ou
- l'objet du message, à savoir si c'est une requête ou une réponse.

6. Contrôleur d'interface réseau (100) selon l'une quelconque des revendications 1 à 5, **caractérisé en ce que** la ou les données caractéristiques (350) de message utilisées pour définir la valeur (30) du facteur de division comportent la taille du message mesurée en octets.

7. Contrôleur d'interface réseau (100) selon l'une quelconque des revendications 1 à 6, **caractérisé en ce que** la valeur (30) du facteur de division est en outre calculé à partir de valeurs caractéristiques du réseau.

8. Contrôleur d'interface réseau (100) selon l'une quelconque des revendications 1 à 7, **caractérisé en ce que** la valeur (30) du facteur de division est en outre calculé à partir d'une constante, la valeur de ladite constante étant telle qu'un signal à une fréquence réduite (42) généré à partir de la valeur de ladite constante et du signal à fréquence fixe (41) provenant de l'horloge de référence (40), correspondrait au temps nécessaire à un message pour faire un aller-retour sur le réseau d'interconnexion (1) à vide.

9. Contrôleur d'interface réseau (100) selon l'une quelconque des revendications 1 à 8, **caractérisé en ce qu'**il est configuré pour que, lorsque le message (300) a été transmis, les données caractéristiques du message (300) soient modifiées et un nouveau facteur de division soit calculé par le module de définition de ralentissement (130), ledit nouveau facteur de division étant calculé à partir de l'ancien facteur de division et des nouvelles données caractéristiques du message transmis.

10. Contrôleur d'interface réseau (100) selon l'une quelconque des revendications 1 à 9, **caractérisé en ce que** le module de définition (130) de ralentissement est configuré pour définir une nouvelle valeur du facteur de division lorsque l'acquittement du message a été reçu par le contrôleur d'interface réseau.

11. Contrôleur d'interface réseau (100) selon l'une quelconque des revendications 1 à 10, **caractérisé en ce qu'**il est configuré de façon à ce que si une instruction de transmission d'un nouveau message est reçue par le module de communication (110), que ladite instruction comporte des données caractéristiques du nouveau message et qu'une partie des données caractéristiques du nouveau message sont enregistrées sur la mémoire tampon (120) de transmission, alors une nouvelle valeur du facteur de division est calculée, ladite nouvelle valeur du facteur de division étant calculée, par le module de définition de ralentissement (130), à partir de l'ancien facteur de division et desdites données caractéristiques du nouveau message.

12. Contrôleur d'interface réseau (100) selon l'une quelconque des revendications 1 à 11, **caractérisé en ce que** le délai de retransmission est calculé à partir du temps courant tel que donné par la ou les horloges à fréquence réduite et d'un délai d'attente constant.

13. Procédé (500) de gestion dynamique, par un contrôleur d'interface réseau (100), d'un délai de retransmission d'un message, au sein d'un réseau d'interconnexion (1) comportant une pluralité de nœuds (200), de façon à renvoyer un message (300) si un délai de retransmission du message est dépassé, ledit contrôleur d'interface réseau comportant un module de communication (210), au moins une mémoire tampon de transmission (120), un module de définition de ralentissement (130), une horloge de référence (40), au moins un diviseur de fréquence (140) et au moins une horloge à fréquence réduite (150), ledit procédé comportant les étapes suivantes :

- réception (510) en provenance d'un nœud source (201), par le module de communication (110), d'une instruction (211) de transmission d'un message (300) à un nœud cible (202), ladite instruction (211) de transmission d'un message comportant des données caractéristiques (350) du message,
- mémorisation (520), dans la mémoire tampon de transmission (120), d'au moins une partie des données caractéristiques (350) du message et association de ladite partie des données caractéristiques du message à un délai de retransmission (20) du message,
- définition (530), par le module de définition de ralentissement (130), d'une valeur (30) du facteur de division à partir desdites données caractéristiques (350) du message,
- génération (540), par le diviseur de fréquence (140), d'un signal à fréquence réduite (42) à partir de la valeur (30) du facteur de division et d'un signal à fréquence fixe (41) provenant de l'horloge de référence (40),
- décompte (550), par l'horloge à fréquence réduite (150) associée à la mémoire tampon de transmission (120), du délai de retransmission (20) à une fréquence égale à la fréquence du signal à fréquence réduite (42), et
- déclenchement (560) d'une retransmission du message (300) si le délai de retransmission (20) est dépassé.

**Patentansprüche**

1. Netzwerkschnittstellen-Controller (100) für die dynamische Verwaltung einer Verzugsdauer bei der Übermittlung (20) einer Nachricht (300) in einem Verbundnetz (1) mit einer Vielzahl von Knoten (200), wobei der Netzwerkschnittstellen-Controller (100) eine Nachricht (300) zurücksenden kann, wenn eine Verzugsdauer bei der Übermittlung (20) der Nachricht (300) überschritten wird, wobei der Netzwerkschnittstellen-Controller (100) umfasst:

- ein Kommunikationsmodul (110), das von einem Quellknoten (201) kommend einen Befehl zur Übertragung einer Nachricht an einen Zielknoten empfangen kann, wobei der Befehl (211) zur Übertragung einer Nachricht spezifische Daten (350) der Nachricht enthält,
- mindestens einen Übertragungspufferspeicher (120), der zumindest einen Teil der spezifischen Daten (350) der Nachricht speichern und entsprechend eine Verzugsdauer bei der Übermittlung (20) der Nachricht zuordnen kann, wobei der Netzwerkschnittstellen-Controller **dadurch gekennzeichnet ist, dass** er umfasst:

- ein Verzögerungsdefinitionsmodul (130), wobei das Verzögerungsdefinitionsmodul auf der Basis der spezifischen Daten (350) der Nachricht einen Wert (30) des Teilungsfaktors definieren kann,
- einen Referenztaktgeber (40), der ein Signal mit fester Frequenz (41) erzeugen kann,
- mindestens einen Frequenzteiler (140), wobei der Frequenzteiler (140) auf der Basis des Wertes (30) des

**14**

Teilungsfaktors und des von dem Referenztaktgeber (40) kommenden Signals mit fester Frequenz (41) ein Signal mit reduzierter Frequenz (42) erzeugen kann,
- mindestens einen Taktgeber mit reduzierter Frequenz (150), wobei der Taktgeber mit reduzierter Frequenz (150) dem Übertragungspufferspeicher (120) zugeordnet ist, wobei der Taktgeber mit reduzierter Frequenz (150) die Zeitnahme der Verzugsdauer bei der Übermittlung (20) auf der Basis des Signals mit reduzierter Frequenz (42) erlauben und eine erneute Übermittlung der Nachricht (300) auslösen kann, wenn die Verzugsdauer bei der Übermittlung (20) überschritten wird.

2. Netzwerkschnittstellen-Controller (100) nach Anspruch 1, **dadurch gekennzeichnet, dass**, wenn die Nachricht (300) von dem Netzwerkschnittstellen-Controller (100) übertragen wurde, das Verzögerungsdefinitionsmodul (130) dafür konfiguriert ist, mit einer Änderung des Wertes (30) des Teilungsfaktors fortzufahren.

3. Netzwerkschnittstellen-Controller (100) nach einem der Ansprüche 1 oder 2, **dadurch gekennzeichnet, dass** er zu übertragende Daten direkt in einem Speicher des Quellknotens (201) lesen kann, und dass das Verzögerungsdefinitionsmodul (130) dafür konfiguriert ist, eine Zeit für das Lesen der zu übertragenden Daten bei der Definition des Wertes (30) des Teilungsfaktors zu berücksichtigen.

4. Netzwerkschnittstellen-Controller (100) nach einem der Ansprüche 1 bis 3, **dadurch gekennzeichnet, dass** er mindestens acht Übertragungspufferspeicher (120) aufweist, die jeweils einem Frequenzteiler (140) und einem Taktgeber mit reduzierter Frequenz (150) zugeordnet sind.

5. Netzwerkschnittstellen-Controller (100) nach einem der Ansprüche 1 bis 4, **dadurch gekennzeichnet, dass** die nachrichtenspezifischen Daten (350), die durch das Verzögerungsdefinitionsmodul (130) verwendet werden, um den Wert (30) des Teilungsfaktors zu definieren, umfassen:

- die Größe der Nachricht, beispielsweise in Bytes gemessen,
- das Vorhandensein von zu übertragenden Daten in dem Befehl,
- das Vorhandensein einer Adresse des Beginns des zu lesenden Bereichs für den Quellknoten und/oder den Zielknoten,
- das Vorhandensein einer Adresse der Deskriptortabelle, die, wenn sich die zu übertragenden Daten in einem fragmentierten Bereich befinden, die Startadresse und die Länge jedes Fragments auf dem Quellknoten und/oder dem Zielknoten umfasst,
- das Vorhandensein einer virtuellen Adressierung für den Zielknoten und/oder
- den Gegenstand der Nachricht, und zwar ob es sich um eine Anforderung oder eine Antwort handelt.

6. Netzwerkschnittstellen-Controller (100) nach einem der Ansprüche 1 bis 5, **dadurch gekennzeichnet, dass** die nachrichtenspezifischen Daten (350), die verwendet werden, um den Wert (30) des Teilungsfaktors zu definieren, die Größe der Nachricht gemessen in Bytes umfassen.

7. Netzwerkschnittstellen-Controller (100) nach einem der Ansprüche 1 bis 6, **dadurch gekennzeichnet, dass** der Wert (30) des Teilungsfaktors zusätzlich auf der Basis von netzwerkspezifischen Werten berechnet wird.

8. Netzwerkschnittstellen-Controller (100) nach einem der Ansprüche 1 bis 7, **dadurch gekennzeichnet, dass** der Wert (30) des Teilungsfaktors zusätzlich auf der Basis einer Konstante berechnet wird, wobei der Wert der Konstante derart ist, dass ein Signal mit reduzierter Frequenz (42), das auf der Basis des Wertes der Konstanten und des von dem Referenztaktgeber (40) kommenden Signals mit fester Frequenz (41) erzeugt wird, der Zeit entspricht, die von einer Nachricht benötigt wird, um in dem Verbundnetz (1) ohne Last einen Hin- und Rückweg zurückzulegen.

9. Netzwerkschnittstellen-Controller (100) nach einem der Ansprüche 1 bis 8, **dadurch gekennzeichnet, dass** er derart konfiguriert ist, dass, wenn die Nachricht (300) übertragen worden ist, die nachrichtenspezifischen Daten (300) geändert werden und durch das Verzögerungsdefinitionsmodul (130) ein neuer Teilungsfaktor berechnet wird, wobei der neue Teilungsfaktor auf der Basis des alten Teilungsfaktors und neuer spezifischer Daten der übertragenen Nachricht berechnet wird.

10. Netzwerkschnittstellen-Controller (100) nach einem der Ansprüche 1 bis 9, **dadurch gekennzeichnet, dass** das Verzögerungsdefinitionsmodul (130) dafür konfiguriert ist, einen neuen Wert des Teilungsfaktors zu definieren, wenn durch den Netzwerkschnittstellen-Controller die Quittierung der Nachricht empfangen wurde.

11. Netzwerkschnittstellen-Controller (100) nach einem der Ansprüche 1 bis 10, **dadurch gekennzeichnet, dass** er derart konfiguriert ist, dass, wenn von dem Kommunikationsmodul (110) ein Befehl zur Übertragung einer neuen Nachricht empfangen wird, der Befehl spezifische Daten der neuen Nachricht enthält und ein Teil der spezifischen Daten der neuen Nachricht in dem Übertragungspufferspeicher (120) gespeichert wird, dann ein neuer Wert des Teilungsfaktors berechnet wird, wobei der neue Wert des Teilungsfaktors durch das Verzögerungsdefinitionsmodul (130) auf der Basis des alten Teilungsfaktors und der spezifischen Daten der neuen Nachricht berechnet wird.

12. Netzwerkschnittstellen-Controller (100) nach einem der Ansprüche 1 bis 11, **dadurch gekennzeichnet, dass** die Verzugsdauer bei der Übermittlung auf der Basis der aktuellen Zeit, wie sie durch den oder die Taktgeber mit reduzierter Frequenz vorgegeben wird, und einer konstanten Wartezeit berechnet wird.

13. Verfahren (500) der dynamischen Verwaltung, durch einen Netzwerkschnittstellen-Controller (100), einer Verzugsdauer bei der Übermittlung einer Nachricht in einem Verbundnetz (1) mit einer Vielzahl von Knoten (200), um eine Nachricht (300) zurückzusenden, wenn eine Verzugsdauer bei der Übermittlung der Nachricht überschritten wird, wobei der Netzwerkschnittstellen-Controller ein Kommunikationsmodul (210), zumindest einen Übertragungspufferspeicher (120), ein Verzögerungsdefinitionsmodul (130), einen Referenztaktgeber (40), zumindest einen Frequenzteiler (140) und zumindest einen Taktgeber mit reduzierter Frequenz (150) umfasst, wobei das Verfahren die folgenden Schritte umfasst:

- Empfangen (510), durch das Kommunikationsmodul (110), eines von einem Quellknoten (201) kommenden Befehls (211) zur Übertragung einer Nachricht (300) an einen Zielknoten (202), wobei der Befehl (211) zur Übertragung einer Nachricht spezifische Daten (350) der Nachricht enthält,
- Speichern (520), in dem Übertragungspufferspeicher (120), zumindest eines Teils der spezifischen Daten (350) der Nachricht und Zuordnen des Teils der spezifischen Daten der Nachricht zu einer Verzugsdauer bei der Übermittlung (20) der Nachricht,
- Definieren (530), durch das Verzögerungsdefinitionsmodul (130), eines Wertes (30) des Teilungsfaktors auf der Basis der spezifischen Daten (350) der Nachricht,
- Erzeugen (540), durch den Frequenzteiler (140), eines Signals mit reduzierter Frequenz (42) auf der Basis des Wertes (30) des Teilungsfaktors und eines von dem Referenztaktgeber (40) kommenden Signals mit fester Frequenz (41),
- Zählen (550), durch den Taktgeber mit reduzierter Frequenz (150), der dem Übertragungspufferspeicher (120) zugeordnet ist, der Verzugsdauer bei der Übermittlung (20) mit einer Frequenz gleich der Frequenz des Signals mit reduzierter Frequenz (42), und
- Auslösen (560) einer erneuten Übermittlung der Nachricht (300), wenn die Verzugsdauer bei der Übermittlung (20) überschritten wird.

### Claims

1. A network interface controller (100) for the dynamic management of a retransmit timeout (20) of a message (300) within an interconnection network (1) including a plurality of nodes (200), said network interface controller (100) being able to return a message (300) if a retransmit timeout (20) of the message (300) is exceeded, said network interface controller (100) comprising:

- a communication module (110) able to receive, from a source node (201), an instruction to transmit a message to a target node, said message transmission instruction (211) including characteristic data (350) of the message,
- at least one transmission buffer memory (120) able to store at least part of the characteristic data (350) of the message and able to associate it with a retransmit timeout (20) of the message, the network interface controller being **characterized in that** it comprises:
- a slowdown defining module (130), said slowdown defining module being able to define a value (30) of the division factor from said characteristic data (350) of the message,
- a reference clock (40) able to generate a fixed-frequency signal (41),
- at least one frequency divider (140), said frequency divider (140) being able to generate a reduced-frequency signal (42) from the value (30) of the division factor and of the fixed-frequency signal (41) coming from the reference clock (40),
- at least one reduced-frequency clock (150), said reduced-frequency clock (150) being associated with the transmission buffer memory (120), said reduced-frequency clock (150) being able to allow timing the retransmit timeout (20) from the reduced-frequency signal (42) and being able to trigger a retransmission of the message (300) if the retransmit timeout (20) is exceeded.

2. The network interface controller (100) according to claim 1 **characterized in that**, when the message (300) has been transmitted by the network interface controller (100), the slowdown defining module (130) is configured to make a modification of the value (30) of the division factor.

3. The network interface controller (100) according to any of claims 1 or 2, **characterized in that** it is able to read data to be transmitted directly from a memory of the source node (201) and **in that** the slowdown defining module (130) is configured to take into account a reading time for the data to be transmitted during the definition of the value (30) of the division factor.

4. The network interface controller (100) according to any one of claims 1 to 3, **characterized in that** it includes at least eight transmission buffer memories (120) each associated with a frequency divider (140) and with a reduced-frequency clock (150) .

5. The network interface controller (100) according to any one of claims 1 to 4, **characterized in that** the characteristic message data (350) used, by the slowdown defining module (130), to define the value (30) of the division factor include(s):

   - the size of the message, for example measured in bytes,
   - the presence of data to be transmitted in the instruction,
   - the presence of an area start address to be read for the source node and/or the target node,
   - the presence of a descriptor table address including, when the data to be transmitted are on a fractional area, the start address and the length of each fragment on the source node and/or the target node,
   - the presence of a virtual addressing for the target node, and/or
   - the subject of the message, as to whether it is a request or a response.

6. The network interface controller (100) according to any one of claims 1 to 5, **characterized in that** the characteristic message data (350) used to define the value (30) of the division factor include(s) the message size measured in bytes.

7. The network interface controller (100) according to any one of claims 1 to 6, **characterized in that** the value (30) of the division factor is further computed from characteristic values of the network.

8. The network interface controller (100) according to any one of claims 1 to 7, **characterized in that** the value (30) of the division factor is further computed from a constant, the value of said constant being such that a reduced-frequency signal (42) generated from the value of said constant and the fixed-frequency signal (41) coming from the reference clock (40), would correspond to the time required for an empty message to make a round trip on the interconnection network (1).

9. The network interface controller (100) according to any one of claims 1 to 8, **characterized in that** it is configured so that, when the message (300) has been transmitted, the characteristic data of the message (300) are modified and a new division factor is computed by the slowdown defining module (130), said new division factor being computed from the former division factor and the new characteristic data of the transmitted message.

10. The network interface controller (100) according to any one of claims 1 to 9, **characterized in that** the slowdown defining module (130) is configured to define a new value of the division factor when the acknowledgment of the message has been received by the network interface controller.

11. The network interface controller (100) according to any one of claims 1 to 10, **characterized in that** it is configured so that, if an instruction to transmit a new message is received by the communication module (110), if said instruction includes characteristic data of the new message and if part of the characteristic data of the new message are recorded on the transmission buffer memory (120), then a new value of the division factor is computed, said new value of the division factor being computed, by the slowdown defining module (130), from the former division factor and said characteristic data of the new message.

12. The network interface controller (100) according to any one of claims 1 to 11, **characterized in that** the retransmit timeout is computed from the current time as given by the reduced-frequency clock(s) and from a constant timeout.

**13.** A method (500) for dynamically managing, by a network interface controller (100), a message retransmit timeout, within an interconnection network (1) including a plurality of nodes (200), so as to return a message (300) if a retransmit timeout of the message is exceeded, said network interface controller including a communication module (210), at least one transmission buffer memory (120), a slowdown defining module (130), a reference clock (40), at least one frequency divider (140) and at least one reduced-frequency clock (150), said method including the following steps:

- receiving (510), from a source node (201), by the communication module (110), an instruction (211) to transmit a message (300) to a target node (202), said message transmission instruction (211) including characteristic data (350) of the message,
- storing (520), in the transmission buffer memory (120), at least part of the characteristic data (350) of the message and associating said part of the characteristic data of the message with a retransmit time (20) of the message,
- defining (530), by the slowdown defining module (130), a value (30) of the division factor from said characteristic data (350) of the message,
- generating (540), by the frequency divider (140), a reduced-frequency signal (42) from the value (30) of the division factor and a fixed-frequency signal (41) coming from the reference clock (40),
- making a countdown (550), by the reduced-frequency clock (150) associated with the transmission buffer memory (120), of the retransmit timeout (20) at a frequency equal to the frequency of the reduced-frequency signal (42), and
- triggering (560) a retransmission of the message (300) if the retransmit timeout (20) is exceeded.

**FIG. 1**

**FIG. 2**

**FIG. 3**

FIG. 4A

FIG. 4B

**FIG. 4C**

101
110
140 141 142 130
150 151 152 40
120
321 331
311
121 122 160
170

**FIG. 4D**

101
110
140 141 142 130
150 151 152 40
120
311 351
341
331
121 122 160
170

500

510 — Réception en provenance d'un nœud d'une instruction de transmission d'un message, ladite instruction de transmission d'un message comportant des données caractéristiques du message

520 — Mémorisation d'au moins une partie des données caractéristiques du message et association de ladite partie des données caractéristiques du message à un délai de retransmission du message,

530 — Détermination d'une valeur de facteur de division à partir desdites données caractéristiques du message

540 — Génération d'une fréquence d'horloge réduite à partir de la valeur du facteur de division et d'une fréquence d'horloge matérielle

550 — Décompte du délai de retransmission à une fréquence égale à la fréquence d'horloge réduite et

560 — Déclenchement d'une retransmission du message si le délai de retransmission est dépassé

**FIG. 5**

**FIG. 6**

**FIG. 7**

```
┌──────────┐                    ┌──────────┐
│   350    │─────┐              │   610    │◄──────────┐
└──────────┘     │              └──────────┘           │
┌──────────┐     │                   │                 │
│   351    │──┐  │                   ▼                 │
└──────────┘  │  ▼              ┌──────────┐           │
┌──────────┐  └─────────────►   │   620    │           │
│   352    │────────────────►   └──────────┘           │
└──────────┘                         │                 │
                                     ▼                 │
┌──────────┐                    ┌──────────┐           │
│    40    │──────────────────► │   630    │◄──┐       │
└──────────┘                    └──────────┘   │       │
                                     │         │       │
                                     ▼         │       │
                                ┌──────────┐   │       │
                                │   640    │   │       │
                                └──────────┘   │       │
                                     │         │       │
                                     ▼         │       │
                                   ╱────╲      │       │
                                  ╱ 650  ╲─────┘       │
                                  ╲      ╱  non        │
                                   ╲────╱              │
                                     │ oui             │
                                     ▼                 │
                                ┌──────────┐           │
                                │   660    │───────────┘
                                └──────────┘
```

# FIG. 8

**EP 3 470 982 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2004010289 A
- EP 0777363 A